# FASCICULE DE BREVET EUROPEEN

(11) **EP 4 062 034 B1**
(45) Date de publication et mention de la délivrance du brevet: **11.10.2023**
(21) Numéro de dépôt: 20821334.8
(22) Date de dépôt: 18.11.2020
(51) Int. Cl.: F01D 5/28, F04D 29/32, F04D 29/02

(54) **AUBE DE SOUFFLANTE ROTATIVE DE TURBOMACHINE, SOUFFLANTE ET TURBOMACHINE MUNIES DE CELLE-CI**
TURBOFANLAUFSCHAUFEL, TURBOFAN UND DAMIT VERSEHENE TURBOMASCHINE
TURBOFAN BLADE, TURBOFAN AND TURBOMACHINE PROVIDED THEREWITH

(30) Priorité: 20.11.2019 FR 1912933
(43) Date de publication de la demande: 28.09.2022
(73) Titulaire: SAFRAN AIRCRAFT ENGINES, 75015 Paris (FR)
(72) Inventeur: GONDRE, Guillaume Pascal Jean-Charles, 77550 MOISSY-CRAMAYEL (FR); DE GAILLARD, Thomas Alain, 77550 MOISSY-CRAMAYEL (FR); FAIVRE D'ARCIER, Pierre Jean, 77550 MOISSY-CRAMAYEL (FR)
(74) Mandataire: Regimbeau
(86) Numéro de dépôt international: PCT/FR2020/052110
(87) Numéro de publication internationale: WO 2021/099736

(56) Documents cités:
- EP-A1- 1 312 762
- EP-A1- 3 205 827
- US-A1- 2013 224 035
- US-A1- 2018 298 765

## Description

L'invention concerne une aube de soufflante rotative de turbomachine, une soufflante rotative de turbomachine munie de celle-ci et une turbomachine munie de celle-ci.

Le domaine de l'invention concerne les turbomachines d'aéronefs, notamment les turboréacteurs ou les turbopropulseurs.

Le document EP-A-3205827 décrit une aube de soufflante rotative de turbomachine selon le préambule de la revendication 1.

Il est connu que les aubes de soufflante rotative de turbomachine tournent dans un carter fixe les entourant avec un jeu entre les aubes et le carter, lequel est recouvert intérieurement d'un matériau abradable pouvant être raboté par les têtes d'aube en rotation. Le document EP-A-1 312 762 décrit de telles aubes, dont les sommets sont susceptibles d'être désintégrés par la paroi interne du carter de rétention en cas de choc suite à l'apparition d'un balourd ayant entraîné le découplage du palier, afin d'obtenir un jeu plus grand nécessaire au fonctionnement du découpleur. Selon ce document, chaque aube présente près de son sommet une zone fragilisée réalisée au moyen d'une rainure ménagée, parallèlement à son sommet, sur la face extrados. Cette rainure est remplie d'une résine qui assure la continuité aérodynamique de l'extrados au voisinage du sommet. La rainure est ménagée dans le matériau de base de l'aube sur une profondeur telle que la paroi restante en matériau de base de la zone fragilisée côtés bord d'attaque, intrados et bord de fuite a une résistance suffisante pour permettre le rabotage de la couche de matériau abradable et soit suffisamment fragile pour casser à l'apparition d'un choc entre le sommet de l'aube et la paroi intérieure du carter de rétention.

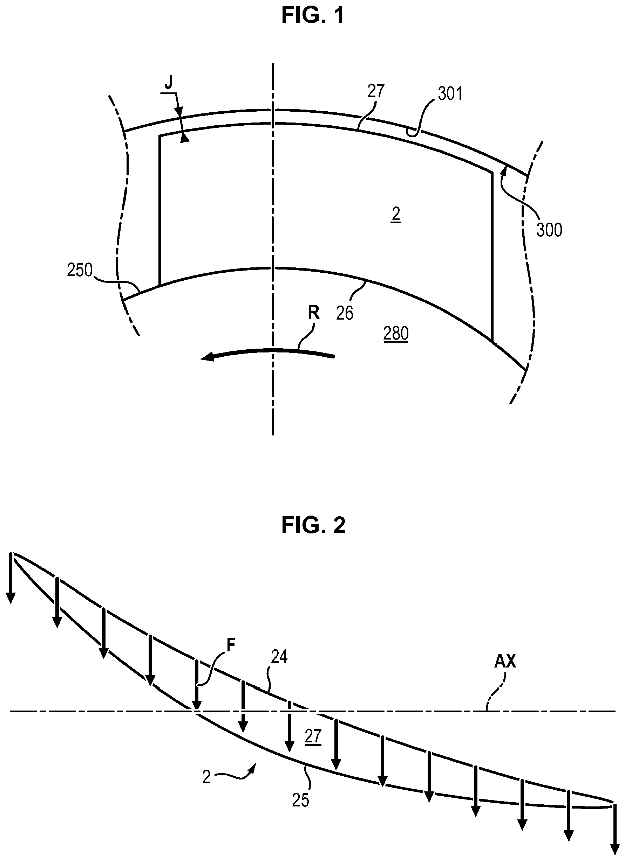

Le mouvement de rotation R du moteur faisant tourner l'aube 2 avec l'association de divers éléments externes comme par exemple l'ingestion d'oiseaux, ou des phénomènes vibratoires, peut induire des contacts soudains et importants entre la tête 27 d'aube et l'abradable 301 situé sur le carter 300 de la soufflante, ainsi que représenté à la figure 1.

Ce contact entre l'aube et le carter peut être à l'origine d'importants dégâts. En effet, un contact ponctuel et soudain peut conduire à déformer l'aube, ce qui va augmenter le contact en termes de surface de l'aube ou de profondeur de contact dans l'abradable. Si le phénomène n'est pas contrôlé, cela peut avoir pour conséquence d'endommager l'aube jusqu'à des pertes de matières importantes.

Pour éviter ce cas de figure, le jeu radial J en tête de la soufflante 280 et le volume de l'aube 2 sont dimensionnés de manière à éviter l'engagement de celle-ci dans l'abradable jusqu'à l'endommagement du moteur.

Des études ont montré que lorsque l'aube fonctionne à haut régime, elle se déforme sous l'effet centrifuge et les efforts aérodynamiques. Le jeu radial J en tête d'aube diminue et il s'avère que dans certains cas, ce jeu J n'assure pas une marge suffisante pour éviter le contact entre la tête 27 d'aube et l'abradable. Ce frottement induit sur la tête 27 d'aube une charge tangentielle, schématisée par les flèches F de la figure 2, dirigée de l'intrados 24 vers l'extrados 25 de l'aube 2 et ce dans la direction opposée à la rotation de l'aube 2 autour de l'axe AX de rotation du moteur.

Cette contrainte implique une déformation supplémentaire de l'aube. Plusieurs cas peuvent alors survenir.

Selon un premier cas, si cette déformation induit une augmentation de jeu de sorte à diminuer les efforts et désengager la pale de l'abradable, l'aube est définie comme non auto-engageante. On estime alors que dans ce premier cas le comportement de l'aube est sain quand elle entre en contact avec l'abradable.

Au contraire, selon un deuxième cas, si une consommation de jeu positive est induite par la déformation, l'aube est définie comme auto-engageante. Dans ce deuxième cas, l'aube va continuer à s'enfoncer dans l'abradable et les efforts sur l'aube vont augmenter. L'aube et les parties environnantes de celle-ci peuvent alors subir de graves dommages.

La solution la plus simple pour éviter ce phénomène d'auto-engagement ou du moins réduire sa criticité est d'augmenter le jeu en tête d'aube afin d'avoir une marge supplémentaire avant le contact de l'aube avec l'abradable. Cette stratégie permet d'éviter tout endommagement du moteur mais peut avoir un impact non négligeable sur les performances aérodynamiques de l'aubage. Le fait d'augmenter le jeu en tête augmente le débit de fuite et les pertes associées dans cette zone.

L'invention vise à obtenir une aube de soufflante rotative de turbomachine permettant de limiter la criticité de l'auto-engagement sur l'aube sans détériorer les performances aérodynamiques.

A cet effet, un premier objet de l'invention est une aube de soufflante rotative de turbomachine, l'aube comportant un corps en un matériau composite ayant un bord amont et un bord aval, entre lesquels le corps s'étend suivant une première direction longitudinale, un extrados et un intrados, entre lesquels le corps s'étend suivant une deuxième direction d'épaisseur, qui est transversale à la première direction, un pied d'aube et un bord supérieur de tête d'aube, entre lesquels le corps s'étend suivant une troisième direction de hauteur, transversale aux première et deuxième directions, le pied d'aube ayant pour fonction la fixation sur un moyeu rotatif longitudinal de soufflante,
l'aube comportant une zone de rupture prescrite, qui s'étend depuis le bord amont sur une longueur non nulle déterminée selon la première direction longitudinale et qui s'étend depuis le bord de tête d'aube sur une hauteur non nulle déterminée suivant la troisième direction de hauteur,
l'aube étant caractérisée en ce que
le corps comprend un renfort fibreux obtenu par tissage tridimensionnel de torons de chaîne s'étendant au moins selon la troisième direction de hauteur et de torons de trame s'étendant au moins selon la première direction longitudinale, et une matrice de résine dans laquelle est noyé le renfort fibreux,
le corps présente dans ou à proximité de la zone de rupture prescrite au moins une discontinuité d'au moins certains des torons de chaîne et/ou d'au moins certains des torons de trame prescrite, configurée pour que la zone de rupture prescrite se détache partiellement en présence d'un frottement tangentiel allant dans la deuxième direction d'épaisseur contre le bord de tête d'aube,
la hauteur non nulle déterminée de la zone de rupture prescrite étant inférieure à 3 % de la hauteur de veine aérodynamique de l'aube, définie du bord supérieur de tête d'aube à un point de début de veine aérodynamique de l'aube, qui est situé à distance du pied d'aube et qui est destiné à être en contact avec une plate-forme inter-aubes selon la troisième direction de hauteur.

Grâce à l'invention, l'usure du bord extérieur de tête d'aube lors de sa rotation éventuelle contre le matériau abradable du carter de la soufflante peut être progressive pour conserver une hauteur suffisante de la tête d'aube diminuant le débit de fuite entre l'aube et ce carter, tout en évitant l'auto-engagement du deuxième cas mentionné ci-dessus. Ainsi lors d'un contact de l'aube contre le matériau abradable du carter de la soufflante avec des efforts importants, de petits morceaux de la zone de rupture partant du bord de tête d'aube se détachent progressivement, ce qui évite d'endommager le reste de l'aube ainsi que les pièces environnantes et désengage l'aube par rapport à l'abradable. L'invention permet d'améliorer les performances aérodynamiques et de limiter les endommagements lors d'évènement critique conduisant à un phénomène d'auto-engagement de l'aube. La zone de rupture prescrite ou zone fusible sur une aube auto-engageante permet lors d'un contact de désengager l'aube limitant ainsi les endommagements à la tête d'aube. Ainsi, plutôt que de changer de nombreuses pièces lors d'un événement critique conduisant à un phénomène d'auto-engagement de l'aube, seule l'aube pourra être réparée ou remplacée. La détermination des jeux en tête d'aube ne tient plus compte du caractère auto-engageant d'une aube. Il est alors possible de réduire les jeux, ce qui améliore les performances aérodynamiques de l'aube. Ainsi, le dimensionnement d'une aube en fonction de la cible moteur (diamètre, vitesse de rotation, etc) déterminera la solution optimale pour réaliser la zone de rupture prescrite parmi les modes de réalisations proposées.

Suivant un mode de réalisation de l'invention, la discontinuité est matérialisée par le fait que le renfort fibreux a un premier taux volumique des torons par rapport au volume de la matrice de résine, présent dans une zone principale située en dehors de la zone de rupture prescrite et a dans la zone de rupture prescrite un deuxième taux volumique des torons par rapport au volume de la matrice de résine, le deuxième taux volumique des torons étant inférieur au premier taux volumique des torons.

Suivant un mode de réalisation de l'invention, la discontinuité est matérialisée par le fait que la zone de rupture prescrite est constituée de la matrice de résine et ne comporte ni torons de chaîne, ni torons de trame dans la hauteur non nulle déterminée.

Suivant un autre mode de réalisation de l'invention, la discontinuité des torons de chaîne et/ou des torons de trame se trouve dans au moins une transition de la zone principale à la zone de rupture prescrite, la transition étant éloignée de la hauteur non nulle déterminée par rapport au bord de tête d'aube,
la zone de rupture prescrite comportant, dans la hauteur non nulle déterminée, le renfort fibreux obtenu par tissage tridimensionnel, ayant le deuxième taux volumique des torons de chaîne s'étendant au moins selon la troisième direction de hauteur et des torons de trame s'étendant au moins selon la première direction longitudinale, et la matrice de résine dans laquelle est noyé le renfort fibreux.

Suivant un mode de réalisation de l'invention, le premier taux volumique des torons est supérieur à 50 % et le deuxième taux volumique des torons est compris entre 10 % et 40 %.

Suivant un autre mode de réalisation de l'invention, la discontinuité est matérialisée par une fin des torons de chaîne , éloignée de la hauteur non nulle déterminée par rapport au bord de tête d'aube,
la zone de rupture prescrite est constituée de la matrice de résine et de torons de trame du renfort fibreux sans torons de chaîne dans la hauteur non nulle déterminée jusqu'au bord de tête d'aube.

Suivant un autre mode de réalisation de l'invention, la discontinuité est matérialisée par une rupture des torons de chaîne, éloignée de la hauteur non nulle déterminée par rapport au bord de tête d'aube,
la zone de rupture prescrite comportant, dans la hauteur non nulle déterminée jusqu'au bord de tête d'aube, le renfort fibreux obtenu par tissage tridimensionnel des torons de chaîne s'étendant au moins selon la troisième direction de hauteur et des torons de trame s'étendant au moins selon la première direction longitudinale, et la matrice de résine dans laquelle est noyé le renfort fibreux.

Suivant un autre mode de réalisation de l'invention, la discontinuité est matérialisée par une rupture de certains seulement des torons de chaîne, appelés premiers torons de chaîne, la rupture des premiers torons de chaîne étant éloignée de la hauteur non nulle déterminée par rapport au bord de tête d'aube, en conservant la continuité des autres torons de chaîne, appelés deuxièmes torons de chaîne,
la zone de rupture prescrite comportant, dans la hauteur non nulle déterminée jusqu'au bord de tête d'aube, le renfort fibreux obtenu par tissage tridimensionnel des premiers et deuxièmes torons de chaîne s'étendant au moins selon la troisième direction de hauteur et des torons de trame s'étendant au moins selon la première direction longitudinale, et la matrice de résine dans laquelle est noyé le renfort fibreux.

Suivant un autre mode de réalisation de l'invention, les premiers torons de chaîne représentent un pourcentage supérieur ou égal à 10 % et inférieur ou égal à 50 % par rapport au nombre total des premiers et deuxièmes torons de chaîne dans la zone de rupture prescrite.

Suivant un autre mode de réalisation de l'invention, la discontinuité est matérialisée par des torons de chaîne coupés ou discontinus et/ou par des torons de trame coupés ou discontinus dans la zone de rupture prescrite.

Suivant un mode de réalisation de l'invention, la longueur déterminée de la zone de rupture prescrite à partir du bord amont est supérieure ou égale à 20 % d'une longueur du bord supérieur de tête d'aube et inférieure ou égale à 35 % de la longueur du bord supérieur de tête d'aube.

Certaines des caractéristiques des modes de réalisations, telles qu'énoncées ci-dessus, peuvent être le cas échéant combinées.

Un deuxième objet de l'invention est une soufflante rotative de turbomachine, comportant un moyeu rotatif longitudinal de soufflante et une pluralité d'aubes telles que décrites ci-dessus, qui sont fixées au niveau de leur pied d'aube au moyeu rotatif longitudinal de soufflante.

Un troisième objet de l'invention est une turbomachine comportant une soufflante rotative telle que décrite ci-dessus, et, en aval de la soufflante, au moins un compresseur, une chambre de combustion et au moins une turbine.

L'invention sera mieux comprise à la lecture de la description qui va suivre, donnée uniquement à titre d'exemple non limitatif en référence aux figures ci-dessous des dessins annexés.
[Fig. 1] représente une vue schématique de face d'une aube suivant l'état de la technique.
[Fig. 2] représente une vue schématique suivant une direction radiale de la tête d'une aube suivant l'état de la technique.
[Fig. 3] représente une vue schématique de côté d'une aube suivant des modes de réalisation de l'invention.
[Fig. 4] représente une vue schématique agrandie de côté de la tête de l'aube de la figure 3 suivant un premier mode de réalisation de l'invention.
[Fig. 5] représente une vue schématique agrandie de côté de la tête de l'aube suivant des modes de réalisation de l'invention.
[Fig. 6] représente une vue schématique agrandie de côté d'une préforme de l'aube de la figure 5 suivant des modes de réalisation de l'invention.
[Fig. 7] représente une vue schématique agrandie de côté de la tête d'aube d'une préforme de l'aube de la figure 6 suivant un deuxième mode de réalisation de l'invention.
[Fig. 8] représente une vue schématique agrandie de côté de la tête d'aube d'une préforme de l'aube de la figure 6 suivant un troisième mode de réalisation de l'invention.
[Fig. 9A] représente une vue schématique agrandie de côté de la tête d'aube d'une préforme de l'aube de la figure 6 suivant un quatrième mode de réalisation de l'invention.
[Fig. 9B] représente une vue schématique agrandie de côté de la tête d'aube d'une préforme de l'aube de la figure 6 suivant un sixième mode de réalisation de l'invention.
[Fig. 10] représente une vue schématique agrandie de côté de la tête d'aube d'une préforme de l'aube de la figure 6 suivant un cinquième mode de réalisation de l'invention.
[Fig. 11] représente une vue schématique en coupe axiale d'une turbomachine, comportant l'aube suivant l'invention.

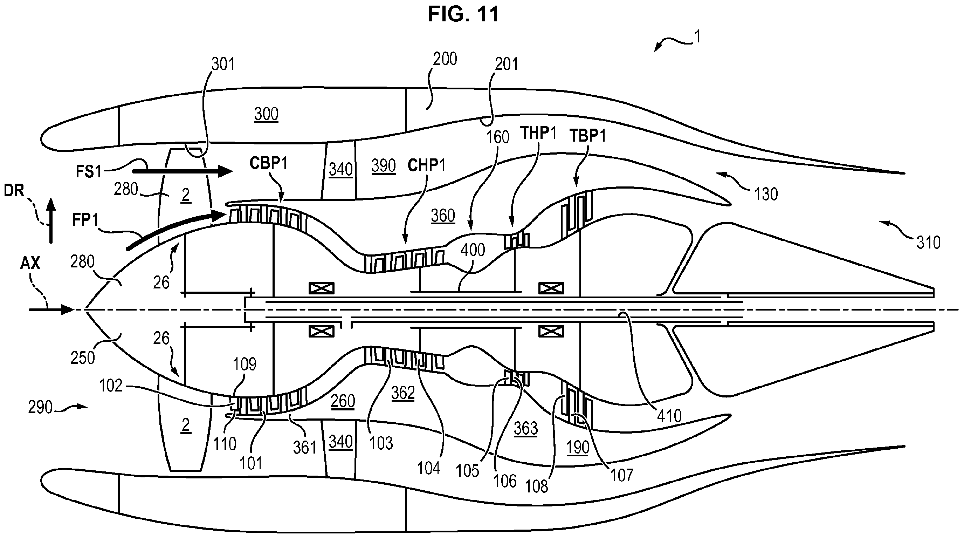

On décrit ci-dessous plus en détail en référence à la figure 11 un exemple de turbomachine 1 sur laquelle peut être utilisée la ou les aubes 2 de soufflante rotative suivant l'invention.

Ainsi que cela est connu, la turbomachine 1 représentée à la figure 11 est destinée à être installée sur un aéronef non représenté pour le propulser dans les airs.

L'ensemble moteur à turbine à gaz ou turbomachine 1 s'étend autour d'un axe AX ou direction axiale AX (ou première direction longitudinale AX mentionnée ci-dessous) orientée de l'amont vers l'aval. Par la suite, les termes « amont », respectivement « aval » ou « avant », respectivement « arrière », ou « gauche » respectivement « droite » ou « axialement » sont pris le long de la direction générale des gaz qui s'écoulent dans la turbomachine selon l'axe AX. La direction allant de l'intérieur vers l'extérieur est la direction radiale DR (ou troisième direction DR de hauteur mentionnée ci-dessous) partant de l'axe AX.

La turbomachine 1 est par exemple à double corps. La turbomachine 1 comprend un premier étage formé par une soufflante rotative 280 et un moteur à turbine à gaz central 130, situé en aval de la soufflante rotative 280. Le moteur à turbine à gaz central 130 comprend, de l'amont vers l'aval dans le sens d'écoulement des gaz, un compresseur basse pression CBP1, un compresseur haute pression CHP1, une chambre de combustion 160, une turbine haute pression THP1 et une turbine basse pression TBP1, qui délimitent un flux primaire de gaz FP1.

La soufflante rotative 280 comprend un ensemble d'aubes 2 rotatives de soufflante s'étendant radialement vers l'extérieur depuis un moyeu rotatif 250 de soufflante. Les aubes 2 rotatives de soufflante sont entourées extérieurement par un carter 300 de soufflante, comportant une ou plusieurs couches 301 d'un matériau abradable sur sa surface située en face des têtes 27 d'aube des aubes 2.

La turbomachine 1 présente une extrémité amont d'admission 290 située en amont de la soufflante 280, et une extrémité aval d'échappement 310. La turbomachine 1 comprend également un carter inter-veine 360 qui délimite une veine primaire dans laquelle circule le flux primaire FP1 qui traverse en aval de la soufflante 280 le compresseur basse pression CBP1, le compresseur haute pression CHP1, la turbine haute pression THP1 et la turbine basse pression TBP1.

Le carter inter-veine 360 comporte, de l'amont vers l'aval, un carter 361 du compresseur basse pression CBP1, un carter intermédiaire 260, qui est interposé entre le compresseur basse pression CBP1 et le compresseur haute pression CHP1, un carter 362 du compresseur haute pression CHP1, un carter 363 de la turbine haute pression THP1 et un carter 190 de la turbine basse pression TBP1.

Le compresseur basse pression CBP1 et le compresseur haute pression CHP1 peuvent comporter chacun un ou plusieurs étages, chaque étage étant formé par un ensemble d'aubes fixes (ou aubage de stator) et un ensemble d'aubes rotatives (ou aubage de rotor).

Les aubes fixes 101 du compresseur basse pression CBP1 sont fixées au carter 361. Les aubes rotatives 102 du compresseur basse pression CBP1 sont fixées à un premier arbre rotatif 410 de transmission.

Les aubes fixes 103 du compresseur haute pression CHP1 sont fixées au carter 362. Les aubes rotatives 104 du compresseur haute pression CHP1 sont fixées à un deuxième arbre rotatif 400 de transmission.

La turbine haute pression THP1 et la turbine basse pression TBP1 peuvent comporter chacun un ou plusieurs étages, chaque étage étant formé par un ensemble d'aubes fixes (ou aubage de stator) et un ensemble d'aubes rotatives (ou aubage de rotor).

Les aubes fixes 105 de la turbine haute pression THP1 sont fixées au carter 363. Les aubes rotatives 106 de la turbine haute pression THP1 sont fixées au deuxième arbre rotatif 400 de transmission.

Les aubes fixes 107 de la turbine basse pression TBP1 sont fixées au carter 190. Les aubes rotatives 108 de la turbine basse pression TBP1 sont fixées au premier arbre rotatif 41 de transmission.

Les aubes 108 rotatives de la turbine basse pression TBP1 entraînent les aubes rotatives 102 du compresseur basse pression CBP1 en rotation autour de l'axe AX sous l'effet de la poussée des gaz provenant de la chambre de combustion 160. Les aubes rotatives 106 de la turbine haute pression THP1 entraînent les aubes rotatives 104 du compresseur haute pression CHP1 en rotation autour de l'axe AX sous l'effet de la poussée des gaz provenant de la chambre de combustion 160.

Les aubes 2 de soufflante rotative sont en amont des aubes 101,102, 103, 104 105, 106, 107 et 108 et sont de forme différente de celles-ci.

En fonctionnement, l'air s'écoule à travers la soufflante rotative 280 et une première partie FP1 (flux primaire FP1) du flux d'air est acheminée à travers le compresseur basse pression CBP1 et le compresseur haute pression CHP1, dans lesquels le flux d'air est comprimé et envoyé à la chambre de combustion 160. Les produits de combustion chauds (non représentés sur les figures) provenant de la chambre de combustion 160 sont utilisés pour entraîner les turbines THP1 et TBP1 et produire ainsi la poussée de la turbomachine 1. La turbomachine 1 comprend également une veine secondaire 390 qui est utilisée pour faire passer un flux secondaire FS1 du flux d'air évacué de la soufflante rotative 280 autour du carter inter-veine 360. Plus précisément, la veine secondaire 390 s'étend entre une paroi interne 201 d'un carénage 200 ou nacelle 200 et le carter inter-veine 360 entourant le moteur à turbine à gaz central 130, le carter 300 de soufflante étant la partie amont de ce carénage 200 ou nacelle 200. Des bras 340 relient le carter intermédiaire 260 à la paroi interne 201 du carénage 200 dans la veine secondaire 390 du flux secondaire FS1.

Ci-dessous, l'aube 2 de soufflante rotative de turbomachine suivant l'invention est décrite en référence aux figures 1 à 10.

Le corps 20 s'étend entre un bord amont 22 et un bord aval 23 éloigné du bord amont suivant la première direction longitudinale AX. Le corps 20 a une courbure tridimensionnelle dans plusieurs sections de plan prises perpendiculairement à la première direction longitudinale AX.

Le corps 20 s'étend entre un extrados 24 et un intrados 25, éloigné de l'extrados 25 suivant la deuxième direction EP d'épaisseur transversale à la première direction AX. L'extrados 24 est tourné vers l'extérieur dans le sens de rotation de l'aube 2 de soufflante lorsque le moyeu 250 de soufflante auquel est fixé le pied 26 d'aube tourne autour de la direction axiale AX. Le corps 20 a une courbure tridimensionnelle dans plusieurs sections de plan prises perpendiculairement à la deuxième direction EP d'épaisseur. L'extrados 24 est dissymétrique par rapport à l'intrados 25.

Le corps 20 s'étend entre un pied 26 d'aube et le bord supérieur 27 de tête d'aube du corps 20, éloigné du pied 26 d'aube suivant la troisième direction DR de hauteur, transversale aux première et deuxième directions AX et EP. Le pied 26 d'aube sert à être fixé au moyeu rotatif longitudinal 250 de soufflante. A cet effet, le pied 26 d'aube peut avoir une section transversale épaissie, pouvant être par exemple en forme de queue d'aronde ou autre, suivant la direction EP par rapport à une zone intermédiaire 26b située entre le pied 26 d'aube et le bord supérieur 27 de tête d'aube. Le pied d'aube 26 peut ainsi être inséré dans un logement périphérique du moyeu 250 de soufflante pour y être fixé.

Suivant un mode de réalisation, en amont du bord amont 22 est collé une pièce de renforcement métallique (7non représentée, également appelé bouclier) formant un bord d'attaque de l'aube 2. La pièce 3 de renforcement a pour fonction de faire face au flux aérodynamique entrant en vol pour répondre au problème d'érosion de l'aube et de protection de l'aube contre l'ingestion d'oiseaux.

Le corps 20 de l'aube 2 est en un matériau composite tissé en trois dimensions dans une résine 43. Le corps 20 en matériau composite comprend une matrice 43 de résine dans laquelle est noyé un renfort fibreux 4 comportant des torons 41 de chaîne s'étendant au moins selon la troisième direction DR de hauteur et des torons 42 de trame s'étendant au moins selon la première direction longitudinale AX à l'état fini de l'aube 2.

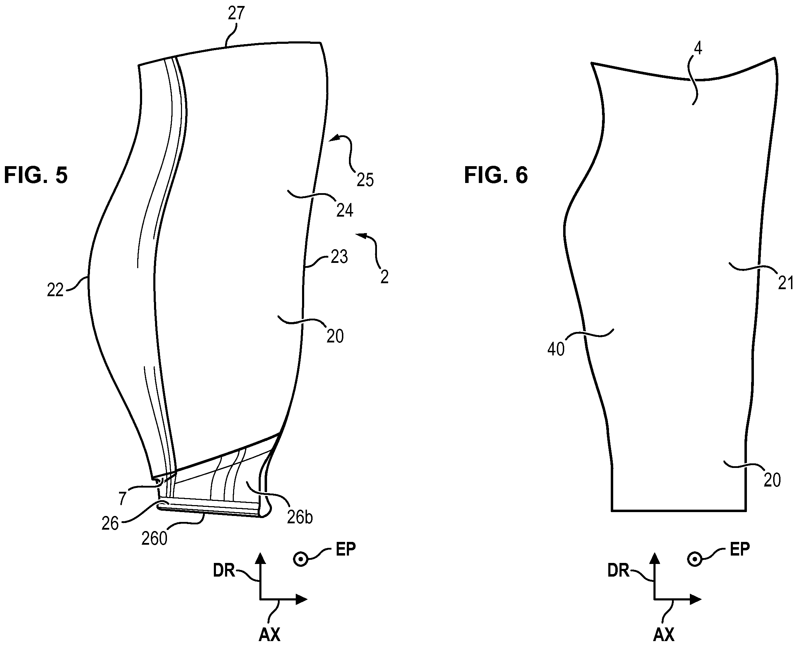

Un procédé de fabrication possible de l'aube 2 est le suivant. Les torons 41 de chaîne sont tissés en trois dimensions avec les torons 42 de trame pour former le renfort fibreux 4 lors d'une première étape de tissage. Les figures 6 à 10 représente la préforme 40 du renfort fibreux 4 mis à plat à l'issue de cette première étape de tissage. Puis, au cours d'une deuxième étape de moulage, le renfort fibreux 4 est placé dans un moule, où le renfort fibreux 4 est déformé selon une courbure tridimensionnelle imposée par une courbure tridimensionnelle prescrite des parois intérieures du moule, puis de la résine 43 est injectée autour du renfort fibreux 4 dans le moule, pour donner la forme tridimensionnelle de l'aube 2 à l'état fini. Après moulage de la résine 43 autour du renfort fibreux 4, les torons 41 de chaîne et les torons 42 de trame présentent la courbure tridimensionnelle mentionnée ci-dessus de l'aube 2 à l'état fini.

Le renfort fibreux 4 peut être formé à partir d'une préforme fibreuse en une seule pièce obtenue par tissage tridimensionnel ou multicouche avec épaisseur évolutive. Il comprend des torons de chaîne et de trame qui peuvent notamment comprendre des fibres en carbone, en verre, en basalte, et/ou en aramide. La matrice quant à elle est typiquement une matrice polymère, par exemple époxyde, bismaléimide ou polyimide. L'aube 2 est alors formée par moulage au moyen d'un procédé d'injection sous vide de résine 43 du type RTM (pour moulage à transfert de résine, en anglais : « Resin Transfer Moulding), ou encore VARRTM (pour moulage à transfert de résine sous vide, en anglais : Vacuum Resin Transfer Molding). Par tissage tridimensionnel, on comprendra que les torons de chaîne suivent des trajets sinueux afin de lier entre eux des torons de trame appartenant à des couches de torons de trame différentes exception faite de déliaisons, étant noté qu'un tissage tridimensionnel, notamment à armure interlock, peut inclure des tissages bidimensionnels en surface. Différentes armures de tissage tridimensionnel peuvent être utilisées, telles que des armures interlock, multi-satin ou multi-voile.

L'aube comporte une zone 5 de rupture prescrite (ou zone fusible 5) partant d'une partie amont du bord 27 de tête d'aube. La zone 5 de rupture prescrite est présente dans une partie auto-engageante de l'aube 2, c'est-à-dire une partie pouvant venir en contact avec le matériau abradable 301 du carter 300 de la soufflante 280, telle que définie ci-dessous. La zone 5 de rupture prescrite est présente sur une hauteur H non nulle déterminée depuis le bord 27 de tête d'aube suivant la troisième direction DR de hauteur. La zone 5 de rupture prescrite est présente sur une longueur non nulle déterminée L depuis le bord amont 22 selon la première direction longitudinale AX. Ainsi, en cas d'effort important sur le bord 27 de tête d'aube, dû à un contact avec l'abradable 301, le bord fusible 5 se détachera partiellement de l'aube, ce qui permet de sortir directement du contact avec l'abradable 301. Les dimensions de la zone fusible 5 peuvent être déterminées en fonction des dimensions des parties de l'aube les plus proches de l'abradable 301.

La hauteur H non nulle déterminée de la zone 5 de rupture prescrite est inférieure à 3 % de la hauteur HVA de veine aérodynamique de l'aube 2 à son bord d'attaque ou à son bord amont 22, et donc de la hauteur totale de l'aube 2 entre la surface inférieure 260 du pied 26 d'aube et le bord 27 de tête d'aube à son bord d'attaque ou à son bord amont 22. Suivant un mode de réalisation, la hauteur H non nulle déterminée de la zone 5 de rupture prescrite est inférieure ou égale à 2 %, et par exemple inférieure ou égale à 1.5 % de la hauteur HVA de veine aérodynamique de l'aube 2 à son bord d'attaque ou à son bord amont 22, et donc de la hauteur totale de l'aube 2 entre la surface inférieure 260 du pied 26 d'aube et le bord 27 de tête d'aube à son bord d'attaque ou à son bord amont 22. La hauteur H non nulle déterminée de la zone 5 de rupture prescrite est supérieure à 0.5 % de la hauteur HVA de veine aérodynamique de l'aube 2 à son bord d'attaque ou à son bord amont 22, et notamment supérieure à 1 % de la hauteur HVA de veine aérodynamique. Par exemple, la hauteur H peut être d'environ 1 cm pour une hauteur totale d'environ 90 cm entre la surface inférieure 260 du pied 26 d'aube et le bord 27 de tête d'aube à son bord d'attaque. La hauteur HVA de veine aérodynamique est la plus grande distance suivant la direction DR de hauteur, entre le bord 27 de tête d'aube et le point 7 de début de veine aérodynamique de l'aube 2. Le point 7 de début de veine aérodynamique est le point à la fois le plus proche du moyeu central 250 rotatif autour de la direction axiale AX, et faisant face axialement au flux aérodynamique déplacé par l'aube 2 et situé sur l'aube 2. Le point 7 de début de veine aérodynamique est situé à distance du pied 26 d'aube selon la direction DR de hauteur et est destiné à être en contact avec une plate-forme inter-aubes, qui fait la jonction entre deux aubes voisines l'une de l'autre sur la périphérie extérieure du moyeu 250. La hauteur H non nulle déterminée de la zone 5 de rupture prescrite peut varier en fonction de la position dans sa longueur L déterminée et peut être par exemple inclinée par rapport à la direction longitudinale AX.

Suivant un mode de réalisation de l'invention, la longueur déterminée L est plus grande que la hauteur déterminée H.

Suivant un mode de réalisation de l'invention, la longueur déterminée L de la zone 5 de rupture prescrite à partir du bord amont 22 est supérieure ou égale à 20 %, notamment 25%, d'une longueur du bord 27 supérieur de tête d'aube et inférieure ou égale à 35 % de la longueur du bord 27 supérieur de tête d'aube selon la première direction longitudinale AX. La longueur déterminée L de la zone 5 de rupture prescrite peut être par exemple d'environ 30 % de la longueur du bord 27 supérieur de tête d'aube. En effet, des expériences ont montré que les aubes 2 sont surtout auto-engageantes sur cette longueur L partant du bord amont 22, pour atteindre un maximum au bord d'attaque. Bien entendu, dans d'autres modes de réalisation, la longueur L pourrait aller jusqu'au bord aval 23 ou de fuite 23.

Le corps 20 en matériau composite présente dans ou à proximité de la zone 5 de rupture prescrite au moins une discontinuité 6 d'au moins certains des torons 41 de chaîne et/ou au moins une discontinuité 6 d'au moins certains des torons 42 de trame, configurée pour que la zone 5 de rupture prescrite se détache partiellement en présence du frottement tangentiel F allant dans la deuxième direction EP d'épaisseur contre le bord 27 de tête d'aube.

Ainsi, l'invention permet une usure progressive de la zone 5 de rupture prescrite du bord 27 de tête d'aube contre le matériau abradable 301 lors de la rotation de l'aube 2 dans le carter 300 de la soufflante 280 du turboréacteur 1, en libérant du fait de la constitution de cette zone 5 de rupture prescrite, de petits morceaux de la zone 5 de rupture prescrite. Par rapport au document EP-A-1 312 762, l'invention évite une rainure sur une majeure partie de l'épaisseur en-dessous du bord 27 de tête d'aube et de casser d'un coup le sommet d'aube au niveau de cette rainure sur une grande hauteur située au-dessus de cette rainure dès le premier contact du bord 27 de tête d'aube contre le carter 300 de la soufflante 280, la destruction de la rainure selon le document EP-A-1 312 762 libérant au contraire un gros morceau risquant d'endommager le reste de l'aube. Par rapport à l'aube du document EP-A-1 312 762, l'invention permet ainsi d'augmenter les performances aérodynamiques de l'aubage et de diminuer le débit de fuite de la soufflante 280 après la rupture du bord 27 de tête d'aube contre le matériau abradable du carter 300 de la soufflante.

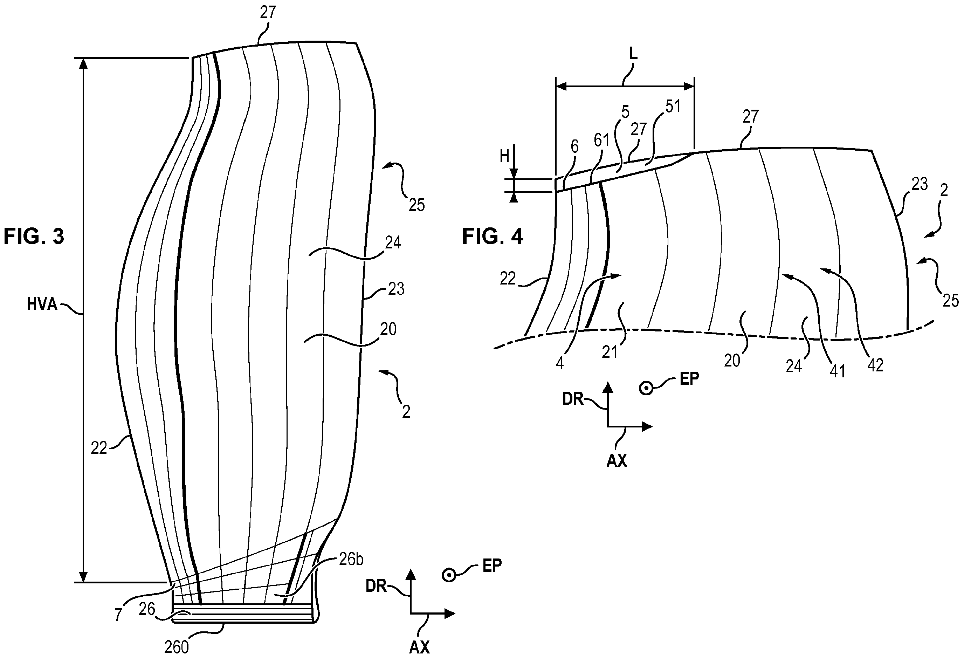

Cette zone 5 de rupture et cette discontinuité 6 peuvent être sous la forme de l'une des zones de rupture 51, 52, 53, 54 et 55 ayant respectivement la discontinuité 61, 62, 63, 64, 66 et 65 dans les modes de réalisation respectifs des figures 4, 7, 8, 9A, 9B et 10, qui sont décrits ci-dessous.

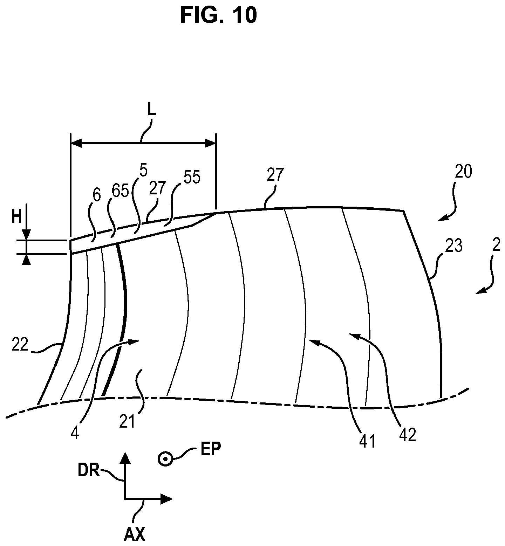

Dans les modes de réalisation des figures 4, 7, 8, 9A et 9B, la discontinuité 6, 61, 62, 63, 64, 66 est située à proximité de la zone 5, 51, 52, 53, 54, 56 de rupture prescrite et est éloignée de la hauteur H prescrite par rapport au bord 27 de tête d'aube. Dans le mode de réalisation de la figure 10, la discontinuité 6, 65 est répartie dans la zone 5, 55 de rupture prescrite.

Dans les modes de réalisation des figures 4, 7 et 8, la discontinuité 6, 61, 62, 63 est matérialisée par le fait que le renfort fibreux 4 a d'une part un premier taux volumique des torons 41 de chaîne s'étendant au moins selon la troisième direction DR de hauteur et des torons 42 de trame s'étendant au moins selon la première direction longitudinale AX, présent dans une zone 21 principale située en dehors de la zone 5, 51, 52, 53 de rupture prescrite, et a d'autre part dans la zone 5, 51, 52, 53 de rupture prescrite un deuxième taux volumique des torons 41 et 42, qui est inférieur au premier taux volumique des torons 41 et 42. Les premier et deuxième taux volumique des torons 41 de chaîne et des torons 42 de trame sont pris par rapport au volume de la matrice 43 de résine dans la zone considérée 21 et 5. L'aube passe donc au niveau de la discontinuité 6, 61, 62, 63 du premier taux premier taux volumique des torons 41 et 42 de la zone 21 principale au deuxième taux volumique des torons 41 et 42 de la zone 5, 51, 52, 53 de rupture prescrite. La zone 5, 51, 52, 53 de rupture prescrite a dans toute la hauteur H et dans toute la longueur L une deuxième raideur, qui est inférieure à la première raideur de la zone 21 principale. Pour réaliser le deuxième taux volumique des torons 41, 42, il est possible de faire sortir des torons 41 de chaîne et/ou des torons 42 de trame en dehors de la préforme 40 afin de diminuer le nombre des torons 41 de chaîne et/ou des torons 42 de trame restant dans la zone fusible 5 de la préforme 40, le volume des torons 41 de chaîne et/ou des torons 42 de trame ayant été enlevé étant alors comblé par la résine 43.

Suivant un mode de réalisation, le premier taux volumique des torons 41, 42 est supérieur à 50 %, notamment supérieur à 55 %, et pouvant être par exemple égal à environ 60 %. Le deuxième taux volumique des torons 41, 42 est compris entre 10% et 40 %, ce qui permet de conserver une raideur suffisante pour tenir les conditions de fonctionnement moteur normales, tout en assurant une différence suffisante de propriétés matériaux par rapport au reste de l'aube 2 suffisante pour agir comme une zone fusible 5.

Dans le mode de réalisation de la figure 4, la discontinuité 6, 61 est matérialisée par le fait que la zone 5, 51 de rupture prescrite est constituée uniquement de la matrice 43 de résine et ne comporte ni torons 41 de chaîne, ni torons 42 de trame dans la hauteur H non nulle déterminée et dans la longueur L déterminée et a donc un deuxième taux volumique nul des torons 41 et 42 dans la zone 5, 51 de rupture prescrite. En effet, la raideur (inférieure à 10 GPa) de la résine seule est inférieure à la raideur (plusieurs centaines de GPa) du composite formé du renfort fibreux 4 ayant les torons 41 et 42 noyés dans la résine 43. On utilise ainsi les variations de propriétés entre les torons 41, 42 et la résine 43 pour réaliser la zone fusible 5. La résine étant sensible à l'érosion, il est possible d'augmenter la surface d'un revêtement (par exemple en polyuréthane) recouvrant l'intrados 25 de l'aube composite afin de couvrir la zone 5 de surplus de résine.

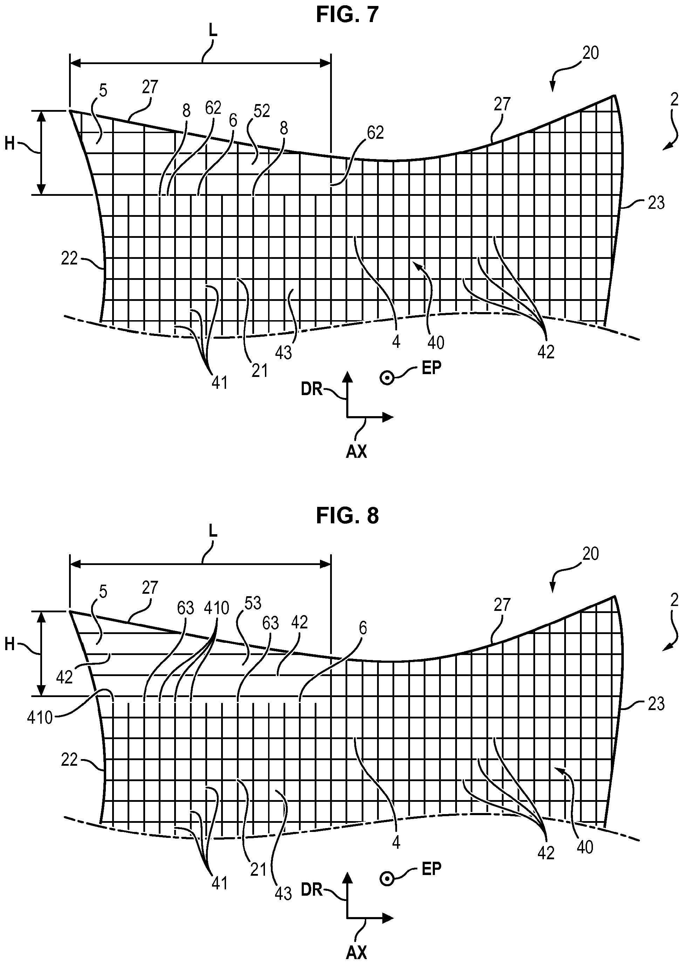

Dans le mode de réalisation de la figure 7, la discontinuité 6, 62 des torons 41 de chaîne et/ou des torons 42 de trame se trouve dans au moins une transition 8 de la zone 21 principale à la zone 5, 52 de rupture prescrite. La transition 8 de la zone 21 principale à la zone 5, 52 de rupture prescrite est éloignée de la hauteur H non nulle déterminée par rapport au bord 27 de tête d'aube. La zone 5, 52 de rupture prescrite comporte, dans la hauteur H non nulle déterminée et dans la longueur L déterminée, le renfort fibreux 4 obtenu par tissage tridimensionnel, ayant le deuxième taux volumique des torons 41 de chaîne s'étendant au moins selon la troisième direction DR de hauteur et des torons 42 de trame s'étendant au moins selon la première direction longitudinale AX, et la matrice 43 de résine dans laquelle est noyé le renfort fibreux 4.

Dans le mode de réalisation de la figure 8, la discontinuité 6, 63 est matérialisée par une fin 410 des torons 41 de chaîne, éloignée de la hauteur H non nulle déterminée par rapport au bord 27 de tête d'aube. La zone 5, 53 de rupture prescrite est constituée de la matrice 43 de résine, dans laquelle sont noyés seulement les torons 42 de trame du renfort fibreux 4 sans torons 41 de chaîne dans la hauteur H non nulle déterminée jusqu'au bord 27 de tête d'aube et dans la longueur L déterminée. Pour réaliser cette zone 5, 53 de rupture prescrite, il est possible de faire sortir les torons 41 de chaîne en dehors de la zone fusible 5 de la préforme 40, le volume des torons 41 de chaîne ayant été enlevé étant alors comblé par la résine 43. L'aube 2 conserve ainsi une tenue minimale en sens trame. Cette tenue peut être nécessaire pour limiter le déplacement et le cambrage des sections de l'aube en fonctionnement moteur.

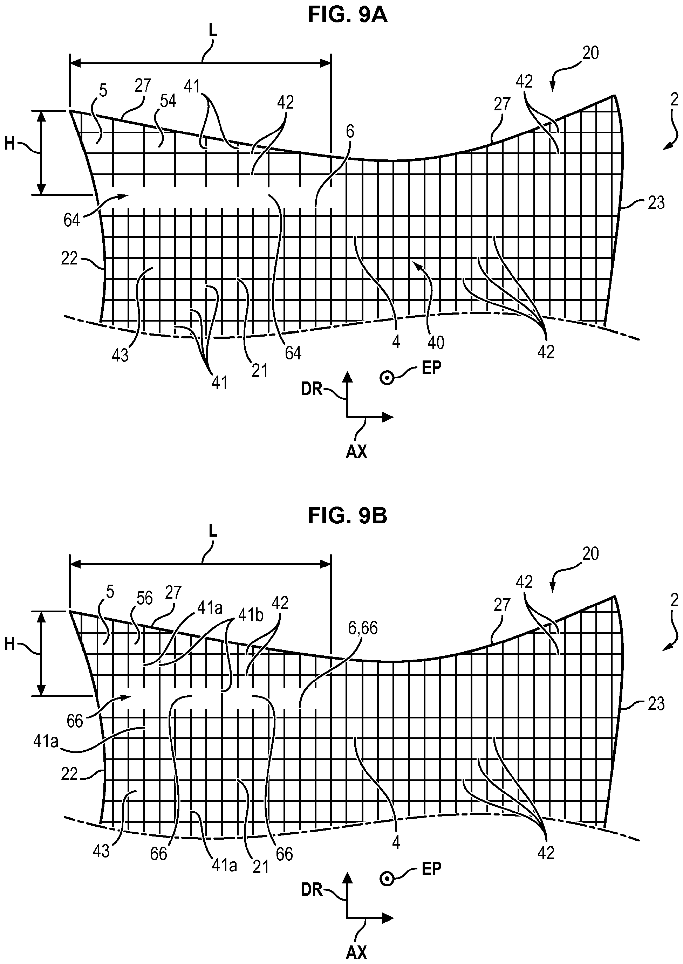

Dans le mode de réalisation de la figure 9A, la discontinuité 6, 64 est matérialisée par une rupture des torons 41 de chaîne, éloignée de la hauteur H non nulle déterminée par rapport au bord 27 de tête d'aube. La zone 5, 54 de rupture prescrite comporte, dans la hauteur H non nulle déterminée jusqu'au bord 27 de tête d'aube, le renfort fibreux 4 obtenu par tissage tridimensionnel des torons 41 de chaîne s'étendant au moins selon la troisième direction DR de hauteur et des torons 42 de trame s'étendant au moins selon la première direction longitudinale AX, et la matrice 43 de résine dans laquelle est noyé le renfort fibreux 4. Lors du tissage de la préforme 40, cette discontinuité 6, 64 est réalisée par sorties puis entrées de torons 41 de chaîne au niveau de la zone fusible 5. Cela permet de créer une fragilité agissant en zone fusible 5 en cas de contact avec l'abradable 301.

Dans le mode de réalisation de la figure 9B, la discontinuité 6, 66 est matérialisée par une rupture de certains seulement 41a des torons 41 de chaîne, appelés premiers torons 41a de chaîne. La rupture des premiers torons 41a de chaîne est éloignée de la hauteur H non nulle déterminée par rapport au bord 27 de tête d'aube. La continuité des autres 41b des torons 41 de chaîne, appelés deuxièmes torons 41b de chaîne est conservée. La zone 5, 56 de rupture prescrite comporte, dans la hauteur H non nulle déterminée jusqu'au bord 27 de tête d'aube, le renfort fibreux 4 obtenu par tissage tridimensionnel des premiers et deuxièmes torons 41a, 41b de chaîne s'étendant au moins selon la troisième direction DR de hauteur et des torons 42 de trame s'étendant au moins selon la première direction longitudinale AX, et la matrice 43 de résine dans laquelle est noyé le renfort fibreux 4. On conserve ainsi un minimum de tenue en sens chaîne tout en conservant la zone fusible 5, 56. Lors du tissage de la préforme 40, cette discontinuité 6, 66 est réalisée par sorties puis entrées des premiers torons 41a de chaîne au niveau de la zone fusible 5. Cela permet de créer une fragilité agissant en zone fusible 5 en cas de contact avec l'abradable 301. Suivant un mode de réalisation, les premiers torons 41a de chaîne représentent un pourcentage supérieur ou égal à 10 % et inférieur ou égal à 50 % par rapport au nombre total des premiers et deuxièmes torons 41a, 41b de chaîne dans la zone 5, 56 de rupture prescrite.

Dans le mode de réalisation de la figure 10, la discontinuité 6, 65 est matérialisée par des torons 41 de chaîne coupés ou discontinus et/ou par des torons 42 de trame coupés ou discontinus dans la zone 5, 55 de rupture prescrite dans toute la hauteur H et dans toute la longueur L. Les torons 41 de chaîne coupés ou discontinus et/ou les torons 42 de trame coupés ou discontinus sont noyés dans la matrice de résine 43 dans la zone 5, 55 de rupture prescrite. Suivant un mode de réalisation, les torons 41 de chaîne coupés ou discontinus et/ou par les torons 42 de trame coupés ou discontinus sont longs, en ce qu'ils ont chacun une longueur supérieure ou égale à 1 cm. Suivant un mode de réalisation, les torons 41 de chaîne coupés ou discontinus et/ou par les torons 42 de trame coupés ou discontinus sont orientés d'une manière aléatoire dans la zone 5, 55 de rupture prescrite. La zone 5, 55 de rupture prescrite a une raideur et un allongement à la rupture plus faible que la zone principale 21. Ces variations permettent ainsi de créer la zone fusible 5, 55.

Bien entendu, les modes de réalisation, caractéristiques, possibilités et exemples décrits ci-dessus peuvent être combinés l'un avec l'autre ou être sélectionnés indépendamment l'un de l'autre.

## Revendications

1. Aube (2) de soufflante rotative de turbomachine, l'aube (2) comportant un corps (20) en un matériau composite ayant un bord amont (22) et un bord aval (23), entre lesquels le corps (20) s'étend suivant une première direction longitudinale (AX), un extrados (24) et un intrados (25), entre lesquels le corps (20) s'étend suivant une deuxième direction (EP) d'épaisseur, qui est transversale à la première direction (AX), un pied (26) d'aube et un bord (27) supérieur de tête d'aube, entre lesquels le corps (20) s'étend suivant une troisième direction (DR) de hauteur, transversale aux première et deuxième directions (AX, EP), le pied (26) d'aube ayant pour fonction la fixation sur un moyeu rotatif longitudinal (250) de soufflante,
l'aube comportant une zone (5, 51, 52, 53, 54, 55, 56) de rupture prescrite, qui s'étend depuis le bord amont (22) sur une longueur non nulle déterminée (L) selon la première direction longitudinale (AX) et qui s'étend depuis le bord (27) de tête d'aube sur une hauteur (H) non nulle déterminée suivant la troisième direction (DR) de hauteur,
l'aube étant **caractérisée en ce que**
le corps (20) comprend un renfort fibreux (4) obtenu par tissage tridimensionnel de torons (41) de chaîne s'étendant au moins selon la troisième direction (DR) de hauteur et de torons (42) de trame s'étendant au moins selon la première direction longitudinale (AX), et une matrice (43) de résine dans laquelle est noyé le renfort fibreux (4),
le corps (20) présente dans ou à proximité de la zone (5, 51, 52, 53, 54, 55, 56) de rupture prescrite au moins une discontinuité (6, 61, 62, 63, 64, 65, 66) d'au moins certains des torons (41) de chaîne et/ou d'au moins certains des torons (42) de trame, configurée pour que la zone (5, 51, 52, 53, 54, 55, 56) de rupture prescrite se détache partiellement en présence d'un frottement tangentiel allant dans la deuxième direction (EP) d'épaisseur contre le bord (27) de tête d'aube,
la hauteur (H) non nulle déterminée de la zone (5, 51, 52, 53, 54, 55, 56) de rupture prescrite étant inférieure à 3 % de la hauteur (HVA) de veine aérodynamique de l'aube (2), définie du bord (27) supérieur de tête d'aube à un point (7) de début de veine aérodynamique de l'aube (2), qui est situé à distance du pied (26) d'aube et qui est destiné à être en contact avec une plate-forme inter-aubes selon la troisième direction (DR) de hauteur.

2. Aube suivant la revendication 1, **caractérisée en ce que** la discontinuité (6, 61, 62, 63) est matérialisée par le fait que le renfort fibreux (4) a un premier taux volumique des torons (41, 42) par rapport au volume de la matrice (43) de résine, présent dans une zone (21) principale située en dehors de la zone (5, 51, 52, 53) de rupture prescrite et a dans la zone (5, 51, 52, 53) de rupture prescrite un deuxième taux volumique des torons (41, 42) par rapport au volume de la matrice (43) de résine, le deuxième taux volumique des torons (41, 42) étant inférieur au premier taux volumique des torons (41, 42).

3. Aube suivant l'une quelconque des revendications 1 et 2, **caractérisée en ce que** la discontinuité (6, 61) est matérialisée par le fait que la zone (5, 51) de rupture prescrite est constituée de la matrice (43) de résine et ne comporte ni torons (41) de chaîne, ni torons (42) de trame dans la hauteur (H) non nulle déterminée.

4. Aube suivant la revendication 2, **caractérisée en ce que** la discontinuité (6, 62) des torons (41) de chaîne et/ou des torons (42) de trame se trouve dans au moins une transition (8) de la zone (21) principale à la zone (5, 52) de rupture prescrite, la transition (8) étant éloignée de la hauteur (H) non nulle déterminée par rapport au bord (27) de tête d'aube, la zone (5, 52) de rupture prescrite comportant, dans la hauteur (H) non nulle déterminée, le renfort fibreux (4) obtenu par tissage tridimensionnel, ayant le deuxième taux volumique des torons (41) de chaîne s'étendant au moins selon la troisième direction (DR) de hauteur et des torons (42) de trame s'étendant au moins selon la première direction longitudinale (AX), et la matrice (43) de résine dans laquelle est noyé le renfort fibreux (4).

5. Aube suivant l'une quelconque des revendications 1, 2 et 4, **caractérisée en ce que** le premier taux volumique des torons (41, 42) est supérieur à 50 % et le deuxième taux volumique des torons (41, 42) est compris entre 10% et 40 %.

6. Aube suivant l'une quelconque des revendications 1 et 2, **caractérisée en ce que** la discontinuité (6, 63) est matérialisée par une fin (410) des torons (41) de chaîne , éloignée de la hauteur (H) non nulle déterminée par rapport au bord (27) de tête d'aube,
la zone (5, 53) de rupture prescrite est constituée de la matrice (43) de résine et de torons (42) de trame du renfort fibreux (4) sans toron (41) de chaîne dans la hauteur (H) non nulle déterminée jusqu'au bord (27) de tête d'aube.

7. Aube suivant la revendication 1, **caractérisée en ce que** la discontinuité (6, 64) est matérialisée par une rupture des torons (41) de chaîne, éloignée de la hauteur (H) non nulle déterminée par rapport au bord (27) de tête d'aube,
la zone (5, 54) de rupture prescrite comportant, dans la hauteur (H) non nulle déterminée jusqu'au bord (27) de tête d'aube, le renfort fibreux (4) obtenu par tissage tridimensionnel des torons (41) de chaîne s'étendant au moins selon la troisième direction (DR) de hauteur et des torons (42) de trame s'étendant au moins selon la première direction longitudinale (AX), et la matrice (43) de résine dans laquelle est noyé le renfort fibreux (4).

8. Aube suivant la revendication 1, **caractérisée en ce que** la discontinuité (6, 66) est matérialisée par une rupture de certains seulement (41a) des torons (41) de chaîne, appelés premiers torons (41a) de chaîne, la rupture des premiers torons (41a) de chaîne étant éloignée de la hauteur (H) non nulle déterminée par rapport au bord (27) de tête d'aube, en conservant la continuité des autres torons (41) de chaîne, appelés deuxièmes torons (41b) de chaîne,
la zone (5, 56) de rupture prescrite comportant, dans la hauteur (H) non nulle déterminée jusqu'au bord (27) de tête d'aube, le renfort fibreux (4) obtenu par tissage tridimensionnel des premiers et deuxièmes torons (41a, 41b) de chaîne s'étendant au moins selon la troisième direction (DR) de hauteur et des torons (42) de trame s'étendant au moins selon la première direction longitudinale (AX), et la matrice (43) de résine dans laquelle est noyé le renfort fibreux (4).

9. Aube suivant la revendication 8, **caractérisée en ce que** les premiers torons (41a) de chaîne représentent un pourcentage supérieur ou égal à 10 % et inférieur ou égal à 50 % par rapport au nombre total des premiers et deuxièmes torons (41a, 41b) de chaîne dans la zone (5, 56) de rupture prescrite.

10. Aube suivant la revendication 1, **caractérisée en ce que** la discontinuité (6, 65) est matérialisée par des torons (41) de chaîne coupés ou discontinus et/ou par des torons (42) de trame coupés ou discontinus dans la zone (5, 55) de rupture prescrite.

11. Aube suivant l'une quelconque des revendications précédentes, **caractérisée en ce que** la longueur déterminée (L) de la zone (5, 51, 52, 53, 54, 55, 56) de rupture prescrite à partir du bord amont (22) est supérieure ou égale à 20 % d'une longueur du bord (27) supérieur de tête d'aube et inférieure ou égale à 35 % de la longueur du bord (27) supérieur de tête d'aube.

12. Soufflante (280) rotative de turbomachine, comportant un moyeu rotatif longitudinal (250) de soufflante et une pluralité d'aubes (2) suivant l'une quelconque des revendications précédentes, qui sont fixées au niveau de leur pied (26) d'aube au moyeu rotatif longitudinal (250) de soufflante.

13. Turbomachine (1) comportant une soufflante rotative (280) suivant la revendication 12, et, en aval de la soufflante (280), au moins un compresseur (CBP1, CHP1), une chambre (160) de combustion et au moins une turbine (THP1, TBP1).

## Patentansprüche

1. Schaufel (2) eines Rotationsgebläses einer Turbomaschine, wobei die Schaufel (2) einen Körper (20) aus einem Kompositmaterial mit einem stromaufwärtigen Rand (22) und einem stromabwärtigen Rand (23) aufweist, zwischen denen sich der Körper (20) gemäß einer ersten Längsrichtung (AX) erstreckt, einem Extrados (24) und einem Intrados (25), zwischen denen sich der Körper (20) gemäß einer zweiten Dickenrichtung (EP) erstreckt, die quer zur ersten Richtung (AX) ist, einem Schaufelfuß (26) und einem oberen Schaufelkopfrand (27), zwischen denen sich der Körper (20) gemäß einer dritten Höhenrichtung (DR) erstreckt, die quer zur ersten und zweiten Richtung (AX, EP) ist, wobei die Funktion des Schaufelfußes (26) die Befestigung auf einer länglichen Rotationsgebläsenabe (250) ist,
wobei die Schaufel eine vorgeschriebene Bruchzone (5, 51, 52, 53, 54, 55, 56) aufweist, die sich ab dem stromaufwärtigen Rand (22) über eine bestimmte Länge von nicht null (L) gemäß der ersten Längsrichtung (AX) erstreckt und die sich ab dem Schaufelkopfrand (27) über eine bestimmte Höhe (H) von nicht null gemäß der dritten Höhenrichtung (DR) erstreckt,
wobei die Schaufel **dadurch gekennzeichnet ist, dass**
der Körper (20) eine durch dreidimensionales Weben von Kettlitzen (41), die sich mindestens gemäß der dritten Höhenrichtung (DR) erstrecken, und von Schusslitzen (42), die sich mindestens gemäß der ersten Längsrichtung (AX) erstrecken, erhaltene Faserverstärkung (4) umfasst, und eine Harzmatrix (43), in welche die Faserverstärkung (4) eingelassen ist,
wobei der Körper (20) in oder in der Nähe der vorgeschriebenen Bruchzone (5, 51, 52, 53, 54, 55, 56) mindestens eine Diskontinuität (6, 61, 62, 63, 64, 65, 66) mindestens einiger der Kettlitzen (41) und/oder mindestens einiger der Schusslitzen (42) aufweist, die dazu ausgelegt ist, damit sich die vorgeschriebene Bruchzone (5, 51, 52, 53, 54, 55, 56) bei Anwesenheit einer Tangentialreibung, die in der zweiten Dickenrichtung (EP) am Schaufelkopfrand (27) erfolgt, teilweise ablöst,
wobei die bestimmte Höhe (H) von nicht null der vorgeschriebenen Bruchzone (5, 51, 52, 53, 54, 55, 56) kleiner als 3 % der Höhe (HVA) der aerodynamischen Strömung der Schaufel (2) ist, die vom oberen Schaufelkopfrand (27) bis zu einem Anfangspunkt (7) der aerodynamischen Strömung der Schaufel (2) definiert ist, der sich vom Schaufelfuß (26) entfernt befindet und der bestimmt ist, mit einer Zwischenschaufel-Plattform gemäß der dritten Höhenrichtung (DR) in Kontakt zu sein.

2. Schaufel nach Anspruch 1, **dadurch gekennzeichnet, dass** die Diskontinuität (6, 61, 62, 63) dadurch materialisiert ist, dass die Faserverstärkung (4) einen ersten Volumenanteil der Litzen (41, 42) im Verhältnis zum Volumen der Harzmatrix (43) in einer Hauptzone (21) hat, die sich außerhalb der vorgeschriebenen Bruchzone (5, 51, 52, 53) befindet, und in der vorgeschriebenen Bruchzone (5, 51, 52, 53) einen zweiten Volumenanteil der Litzen (41, 42) im Verhältnis zum Volumen der Harzmatrix (43) hat, wobei der zweite Volumenanteil der Litzen (41, 42) kleiner als der erste Volumenanteil der Litzen (41, 42) ist.

3. Schaufel nach einem der Ansprüche 1 und 2, **dadurch gekennzeichnet, dass** die Diskontinuität (6, 61) dadurch materialisiert ist, dass die vorgeschriebene Bruchzone (5, 51) aus der Harzmatrix (43) besteht und weder Kettlitzen (41) noch Schusslitzen (42) in der bestimmten Höhe (H) von nicht null aufweist.

4. Schaufel nach Anspruch 2, **dadurch gekennzeichnet, dass** sich die Diskontinuität (6, 62) der Kettlitzen (41) und/oder der Schusslitzen (42) in mindestens einem Übergang (8) von der Hauptzone (21) in die vorgeschriebene Bruchzone (5, 52) befindet, wobei der Übergang (8) von der bestimmten Höhe (H) von nicht null im Verhältnis zum Schaufelkopfrand (27) entfernt ist,
wobei die vorgeschriebene Bruchzone (5, 52) in der bestimmten Höhe (H) von nicht null die durch dreidimensionales Weben erhaltene Faserverstärkung (4) mit dem zweiten Volumenanteil der Kettlitzen (41) aufweist, die sich mindestens gemäß der dritten Höhenrichtung (DR) erstrecken, und der Schusslitzen (42), die sich mindestens gemäß der ersten Längsrichtung (AX) erstrecken, und die Harzmatrix (43), in welche die Faserverstärkung (4) eingelassen ist.

5. Schaufel nach einem der Ansprüche 1, 2 und 4, **dadurch gekennzeichnet, dass** der erste Volumenanteil der Litzen (41, 42) größer als 50 % ist und der zweite Volumenanteil der Litzen (41, 42) zwischen 10 % und 40 % liegt.

6. Schaufel nach einem der Ansprüche 1 und 2, **dadurch gekennzeichnet, dass** die Diskontinuität (6, 63) durch ein Ende (410) der Kettlitzen (41) materialisiert ist, das von der bestimmten Höhe (H) von nicht null im Verhältnis zum Schaufelkopfrand (27) entfernt ist,
wobei die vorgeschriebene Bruchzone (5, 53) aus der Harzmatrix (43) und aus Schusslitzen (42) der Faserverstärkung (4) ohne Kettlitze (41) in der bestimmten Höhe (H) von nicht null bis zum Schaufelkopfrand (27) besteht.

7. Schaufel nach Anspruch 1, **dadurch gekennzeichnet, dass** die Diskontinuität (6, 64) durch einen Bruch der Kettlitzen (41) materialisiert ist, der von der bestimmten Höhe (H) von nicht null im Verhältnis zum Schaufelkopfrand (27) entfernt ist,
wobei die vorgeschriebene Bruchzone (5, 54) in der bestimmten Höhe (H) von nicht null bis zum Schaufelkopfrand (27) die durch dreidimensionales Weben der Kettlitzen (41), die sich mindestens gemäß der dritten Höhenrichtung (DR) erstrecken und der Schusslitzen (42), die sich mindestens gemäß der ersten Längsrichtung (AX) erstrecken, erhaltene Faserverstärkung (4) und die Harzmatrix (43) aufweist, in welche die Faserverstärkung (4) eingelassen ist.

8. Schaufel nach Anspruch 1, **dadurch gekennzeichnet, dass** die Diskontinuität (6, 66) durch einen Bruch von nur einigen (41a) Kettlitzen (41), bezeichnet als ersten Kettlitzen (41a), materialisiert ist, wobei der Bruch der ersten Kettlitzen (41a) von der bestimmten Höhe (H) von nicht null im Verhältnis zum Schaufelkopfrand (27) entfernt ist, bei Beibehaltung der Kontinuität der anderen Kettlitzen (41), bezeichnet als zweiten Kettlitzen (41b),
wobei die vorgeschriebene Bruchzone (5, 56) in der bestimmten Höhe (H) von nicht null bis zum Schaufelkopfrand (27) die durch dreidimensionales Weben der ersten und zweiten Kettlitzen (41a, 41b), die sich mindestens gemäß der dritten Höhenrichtung (DR) erstrecken, und der Schusslitzen (42), die sich mindestens gemäß der ersten Längsrichtung (AX) erstrecken, erhaltene Faserverstärkung (4) und die Harzmatrix (43) aufweist, in welche die Faserverstärkung (4) eingelassen ist.

9. Schaufel nach Anspruch 8, **dadurch gekennzeichnet, dass** die ersten Kettlitzen (41a) einen Prozentsatz von über oder gleich 10 % und von unter oder gleich 50 % im Verhältnis zur Gesamtanzahl der ersten und zweiten Kettlitzen (41a, 41b) in der vorgeschriebenen Bruchzone (5, 56) darstellen.

10. Schaufel nach Anspruch 1, **dadurch gekennzeichnet, dass** die Diskontinuität (6, 65) durch geschnittene oder diskontinuierliche Kettlitzen (41) und/oder durch geschnittene oder diskontinuierliche Schusslitzen (42) in der vorgeschriebenen Bruchzone (5, 55) materialisiert ist.

11. Schaufel nach einem der vorangehenden Ansprüche, **dadurch gekennzeichnet, dass** die bestimmte Länge (L) der vorgeschriebenen Bruchzone (5, 51, 52, 53, 54, 55, 56) ab dem stromaufwärtigen Rand (22) größer oder gleich 20 % einer Länge des oberen Schaufelkopfrands (27) und kleiner oder gleich 35 % der Länge des oberen Schaufelkopfrands (27) ist.

12. Rotationsgebläse (280) einer Turbomaschine, das eine längliche rotatorische Gebläsenabe (250) und eine Vielzahl von Schaufeln (2) nach einem der vorangehenden Ansprüche aufweist, die im Bereich ihres Schaufelfußes (26) an der länglichen rotatorischen Gebläsenabe (250) befestigt sind.

13. Turbomaschine (1), die ein Rotationsgebläse (280) nach Anspruch 12 und dem Gebläse (280) nachgelagert mindestens einen Verdichter (CBP1, CHP1), eine Brennkammer (160) und mindestens eine Turbine (THP1, TBP1) aufweist.

## Claims

1. A blade (2) for a turbomachine rotary fan, the blade (2) comprising a body (20) made of a composite material having an upstream edge (22) and a downstream edge (23), between which the body (20) extends along a first longitudinal direction (AX), an extrados (24) and an intrados (25), between which the body (20) extends along a second thickness direction (EP), which is transverse to the first direction (AX), a blade root (26) and an upper blade tip edge (27), between which the body (20) extends along a third height direction (DR), transverse to the first and second directions (AX, EP), a function of the blade root (26) being to be fixed to a longitudinal rotary fan hub (250),
the blade comprising a predetermined breaking zone (5, 51, 52, 53, 54, 55, 56), which extends from the upstream edge (22) over a determined non-zero length (L) along the first longitudinal direction (AX) and which extends from the blade tip edge (27) over a determined non-zero height (H) along the third height direction (DR),
the blade being **characterized in that**
the body (20) comprises a fiber reinforcement (4) obtained by three-dimensional weaving of warp strands (41) extending at least along the third height direction (DR) and of weft strands (42) extending at least along the first longitudinal direction (AX), and a resin matrix (43) in which the fiber reinforcement (4) is embedded,
the body (20) has, in or in proximity to the predetermined breaking zone (5, 51, 52, 53, 54, 55, 56), at least one discontinuity (6, 61, 62, 63, 64, 65, 66) of at least certain of the warp strands (41) and/or of at least certain of the weft strands (42), configured so that the predetermined breaking zone (5, 51, 52, 53, 54, 55, 56) is partially detached in presence of tangential friction extending in the second thickness direction (EP) against the blade tip edge (27),
the determined non-zero height (H) of the predetermined breaking zone (5, 51, 52, 53, 54, 55, 56) being less than 3% of an aerodynamic stream height (HVA) of the blade (2), defined from the upper blade tip edge (27) to an aerodynamic stream starting point (7) of the blade (2), which is located at a distance from the blade root (26) and which is intended to be in contact with an inter-blade platform along the third height direction (DR).

2. The blade according to claim 1, **characterized in that** the discontinuity (6, 61, 62, 63) is embodied by the fact that the fiber reinforcement (4) has a first volume ratio of the strands (41, 42) relative to a volume of the resin matrix (43), present in a main zone (21) located outside the predetermined breaking zone (5, 51, 52, 53) and has in the predetermined breaking zone (5, 51, 52, 53) a second volume ratio of the strands (41, 42) relative to the volume of the resin matrix (43), the second volume ratio of the strands (41, 42) being less than the first volume ratio of the strands (41, 42).

3. The blade according to any one of claims 1 and 2, **characterized in that** the discontinuity (6, 61) is embodied by the fact that the predetermined breaking zone (5, 51) consists of the resin matrix (43) and comprises neither warp strands (41) nor weft strands (42) in the determined non-zero height (H).

4. The blade according to claim 2, **characterized in that** the discontinuity (6, 62) of the warp strands (41) and/or of the weft strands (42) is located in at least one transition (8) from the main zone (21) to the predetermined breaking zone (5, 52), the transition (8) being distant by the determined non-zero height (H) from the blade tip edge (27),
the predetermined breaking zone (5, 52) comprising, in the determined non-zero height (H), the fiber reinforcement (4) obtained by three-dimensional weaving, having the second volume ratio of the warp strands (41) extending at least along the third height direction (DR) and of the weft strands (42) extending at least along the first longitudinal direction (AX), and the resin matrix (43) in which the fiber reinforcement (4) is embedded.

5. The blade according to any one of claims 1, 2 and 4, **characterized in that** the first volume ratio of the strands (41, 42) is greater than 50 % and the second volume ratio of the strands (41, 42) is comprised between 10% and 40 %.

6. The blade according to any one of claims 1 and 2, **characterized in that** the discontinuity (6, 63) is embodied by an end (410) of the warp strands (41), distant by the determined non-zero height (H) from the blade tip edge (27),
the predetermined breaking zone (5, 53) consists of the resin matrix (43) and of weft strands (42) of the fiber reinforcement (4) with no warp strands (41) in the determined non-zero height (H) up to the blade tip edge (27).

7. The blade according to claim 1, **characterized in that** the discontinuity (6, 64) is embodied by a breaking of the warp strands (41), distant by the determined non-zero height (H) from the blade tip edge (27),
the predetermined breaking zone (5, 54) comprising, in the determined non-zero height up to the blade tip edge (27), the fiber reinforcement (4) obtained by three-dimensional weaving of the warp strands (41) extending at least along the third height direction (DR) and of the weft strands (42) extending at least along the first longitudinal direction (AX) and the resin matrix (43) in which the fiber reinforcement (4) is embedded.

8. The blade according to claim 1, **characterized in that** the discontinuity (6, 66) is embodied by a breaking of only certain (41a) of the warp strands (41), called first warp strands (41a), the breaking of the first warp strands (41a) being distant by the determined non-zero height (H) from the blade tip edge (27), while retaining a continuity of the other warp strands (41), called second warp strands (41b),
the predetermined breaking zone (5, 56) comprising, in the determined non-zero height (H) up to the blade tip edge (27), the fiber reinforcement (4) obtained by three-dimensional weaving of the first warp strands and of the second warp strands (41a, 41b) extending at least along the third height direction (DR) and of the weft strands (42) extending at least along the first longitudinal direction (AX), and the resin matrix (43) in which the fiber reinforcement (4) is embedded.

9. The blade according to claim 8, **characterized in that** the first warp strands (41a) represent a percentage greater than or equal to 10 % and less than or equal to 50 % relative to the total number of the first warp strands and of the second warp strands (41a, 41b) in the predetermined breaking zone (5, 56).

10. The blade according to claim 1, **characterized in that** the discontinuity (6, 65) is embodied by cut or discontinuous warp strands (41) and/or by cut or discontinuous weft strands (42) in the predetermined breaking zone (5, 55).

11. The blade according to any one of the preceding claims, **characterized in that** the determined length (L) of the predetermined breaking zone (5, 51, 52, 53, 54, 55, 56) from the upstream edge (22) is greater than or equal to 20 % of a length of the upper blade tip edge (27) and less than or equal to 35 % of the length of the upper blade tip edge (27).

12. A turbomachine rotary fan (280), comprising a longitudinal rotary fan hub (250) and a plurality of blades (2) according to any one of the preceding claims, which are fixed at their blade root (26) to the longitudinal rotary fan hub (250).

13. A turbomachine (1) comprising a rotary fan (280) according to claim 12 and downstream of the fan (280), at least one compressor (CBP1, CHP1), a combustion chamber (160) and at least one turbine (THP1, TBP1).
